# EUROPEAN PATENT SPECIFICATION

(11) **EP 3 495 939 B1**
(45) Date of publication and mention of the grant of the patent: **30.06.2021**
(21) Application number: 17890845.5
(22) Date of filing: 13.10.2017
(51) Int. Cl.: G06F 3/06

(54) **METHOD AND DEVICE FOR STORING DATA IN DISTRIBUTED BLOCK STORAGE SYSTEM, AND COMPUTER READABLE STORAGE MEDIUM**
VERFAHREN UND VORRICHTUNG ZUM SPEICHERN VON DATEN IN EINEM VERTEILTEN BLOCKSPEICHERSYSTEM UND COMPUTERLESBARES SPEICHERMEDIUM
PROCÉDÉ ET DISPOSITIF DE STOCKAGE DE DONNÉES DANS UN SYSTÈME DE STOCKAGE DE BLOCS DISTRIBUÉ ET SUPPORT DE STOCKAGE LISIBLE PAR ORDINATEUR

(43) Date of publication of application: 12.06.2019
(73) Proprietor: Huawei Technologies Co., Ltd., Shenzhen, Guangdong 518129 (CN)
(72) Inventor: WEI, Mingchang, Shenzhen Guangdong 518129 (CN); RAO, Rong, Shenzhen Guangdong 518129 (CN)
(74) Representative: Maiwald Patent- und Rechtsanwaltsgesellschaft mbH
(86) International application number: PCT/CN2017/106147
(87) International publication number: WO 2019/071595

(56) References cited:
- EP-A1- 2 787 446
- CN-A- 103 368 870
- CN-A- 103 458 023
- CN-A- 105 242 879
- CN-A- 105 404 469
- US-A1- 2017 031 988
- US-B2- 9 710 331

## Description

### TECHNICAL FIELD

The present invention relates to the field of information technologies, and in particular, to a method and an apparatus for storing data in a distributed block storage system, and a computer readable storage medium.

### BACKGROUND

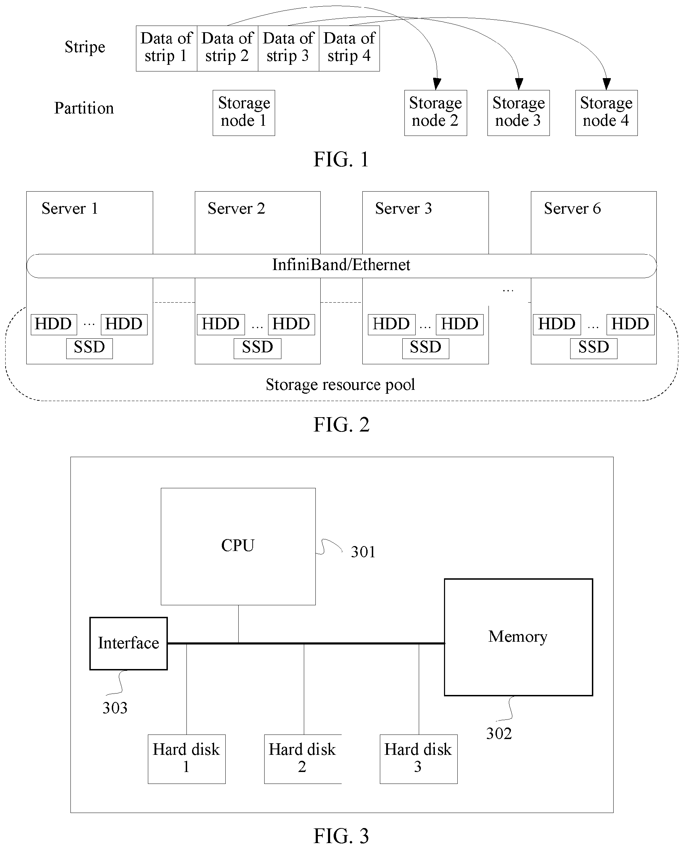

A distributed block storage system includes a partition, the partition includes storage nodes and stripes, each stripe in the partition includes a plurality of strips, and a storage node in the partition corresponds to a strip in the stripe. That is, a storage node in the partition provides storage space to a strip in the stripe. Usually, as shown in FIG. 1, a partition includes a primary storage node (a storage node 1), and the primary storage node is configured to receive data sent by a client. Then, the primary storage node selects a stripe, divides the data into data of a strip, and sends data of a strip stored in another storage node to corresponding storage nodes (a storage node 2, a storage node 3, and a storage node 4). The foregoing operation makes the primary storage node easily become a data write bottleneck, increases data exchange between storage nodes, and degrades write performance of the distributed block storage system.

EP 2 787 446 A1 describes methods and apparatuses for improvement of storage consistency of a distributed storage system. The therein described method includes: a primary storage node performs EC coding on a to-be-stored data segment to obtain a target EC stripe.

US 9 710 331 B2 describes a distributed data storage method, apparatus, and system. The therein described method includes splitting a data file to generate K data slices, splitting each data slice of the K data slices to generate M data blocks for each data slice, and performing check coding on the M data blocks by using a redundancy algorithm to generate N check blocks.

### SUMMARY

This application provides a method and an apparatus for storing data in a distributed block storage system as claimed by the independent claims, where a primary storage node is not required, so that data exchange between storage nodes is reduced, and write performance of a distributed block storage system is improved. Further embodiments are provided in the dependent claims. Further embodiments of the description not falling under the scope of protection of the claims are provided for explanatory purpose only.

### BRIEF DESCRIPTION OF DRAWINGS

FIG. 1 is a schematic diagram of data storage of a distributed block storage system in the prior art;
FIG. 2 is a schematic diagram of a distributed block storage system according to an embodiment of the present invention;
FIG. 3 is a schematic structural diagram of a server in a distributed block storage system according to an embodiment of the present invention;
FIG. 4 is a schematic diagram of a partition view of a distributed block storage system according to an embodiment of the present invention;
FIG. 5 is a schematic diagram of a relationship between strips and storage nodes in a distributed block storage system according to an embodiment of the present invention;
FIG. 6 is a flowchart of a method for writing data by a client in a distributed block storage system according to an embodiment of the present invention;
FIG. 7 is a schematic diagram of determining a partition by a client in a distributed block storage system according to an embodiment of the present invention;
FIG. 8 is a flowchart of a method for storing data in a storage node in a distributed block storage system according to an embodiment of the present invention;
FIG. 9 is a schematic diagram of storing a stripe in a storage node in a distributed block storage system according to an embodiment of the present invention;
FIG. 10 is a schematic diagram of storing a stripe in a storage node in a distributed block storage system according to an embodiment of the present invention;
FIG. 11 is a schematic structural diagram of an apparatus for writing data in a distributed block storage system according to an embodiment of the present invention; and
FIG. 12 is a schematic structural diagram of an apparatus for storing data in a distributed block storage system according to an embodiment of the present invention.

### DESCRIPTION OF EMBODIMENTS

A distributed block storage system in the embodiments of the present invention is, for example, Huawei ® Fusionstorage® series. For example, as shown in FIG. 2, a distributed block storage system includes a plurality of servers such as a server 1, a server 2, a server 3, a server 4, a server 5, and a server 6, and the servers communicate with each other by using the InfiniBand, the Ethernet, or the like. In actual application, a quantity of servers in the distributed block storage system may be increased based on an actual requirement. This is not limited in the embodiments of the present invention.

A server of the distributed block storage system includes a structure shown in FIG. 3. As shown in FIG. 3, each server in the distributed block storage system includes a central processing unit (Central Processing Unit, CPU) 301, a memory 302, an interface 303, a hard disk 1, a hard disk 2, and a hard disk 3, the memory 302 stores a computer instruction, and the CPU 301 executes a program instruction in the memory 302 to perform a corresponding operation. The interface 303 may be a hardware interface such as a network interface card (Network Interface Card, NIC) or a host bus adapter (Host Bus Adapter, HBA), or may be a program interface module or the like. A hard disk includes a solid-state drive (Solid State Disk, SSD), a mechanical hard disk, or a hybrid hard disk. The mechanical hard disk is, for example, an HDD (Hard Disk Drive). Additionally, to save computing resources of the CPU 301, a field programmable gate array (Field Programmable Gate Array, FPGA) or other hardware may replace the CPU 301 to perform the foregoing corresponding operation, or an FPGA or other hardware and the CPU 301 jointly perform the foregoing corresponding operation. For convenience of description, in the embodiments of the present invention, a combination of the CPU 301, the memory 302, the FPGA, and the other hardware replacing the CPU 301 or a combination of the FPGA, the other hardware replacing the CPU 301, and the CPU 301 is collectively referred to as a processor.

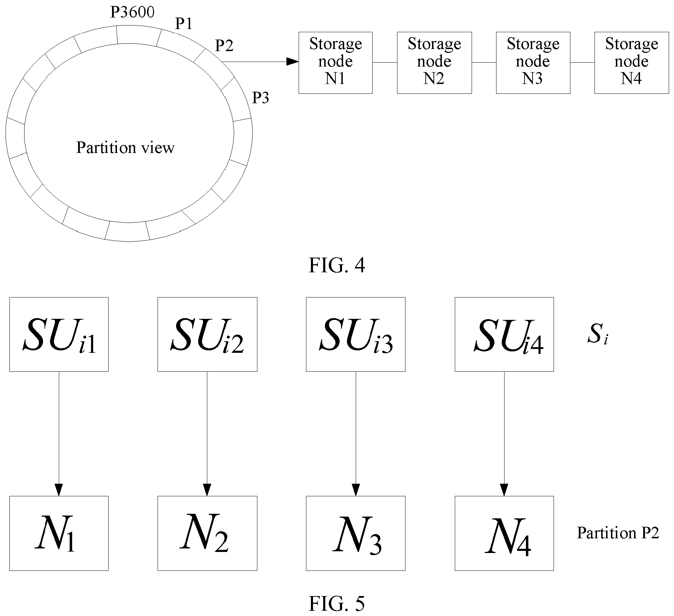

In the structure shown in FIG. 3, an application program is loaded into the memory 302, the CPU 301 executes an instruction of the application program in the memory 302, and the server is used as a client. Additionally, the client may be a device independent of the servers shown in FIG. 2. The application program may be a virtual machine (Virtual Machine, VM), or may be a particular application such as office software. The client writes data to the distributed block storage system or reads data from the distributed block storage system. For a structure of the client, refer to FIG. 3 and a related description. A program of the distributed block storage system is loaded into the memory 302, and the CPU 301 executes the program of the distributed block storage system in the memory 302, to provide a block protocol access interface to the client, and provide a distributed block storage access point service to the client, so that the client accesses a storage resource in a storage resource pool in the distributed block storage system. Usually, the block protocol access interface is configured to provide a logical unit to the client. The server runs the program of the distributed block storage system, so that the server that includes the hard disks and that is used as a storage node is configured to store data of the client. For example, in the server, one hard disk may be used as one storage node by default. That is, when the server includes a plurality of hard disks, the plurality of hard disks may be used as a plurality of storage nodes. In another implementation, the server runs the program of the distributed block storage system to serve as one storage node. This is not limited in the embodiments of the present invention. Therefore, for a structure of a storage node, refer to FIG. 3 and a related description. When the distributed block storage system is initialized, Hash space (such as 0 to 2^32) is divided into N equal portions, each equal portion is one partition (Partition), and these N equal portions are averaged based on a quantity of hard disks. For example, in the distributed block storage system, N is 3600 by default, that is, partitions are P1, P2, P3, ..., and P3600, respectively. If the current distributed block storage system includes 18 hard disks (storage nodes), each storage node bears 200 partitions. A partition P includes M storage nodes Nⱼ, and a correspondence between a partition and a storage node, that is, a mapping between a partition and a storage node Nⱼ included in the partition is also referred to as a partition view. As shown in FIG. 4, an example in which a partition includes four storage nodes Nⱼ is used, and a partition view is "P2 - storage node N₁ - storage node N_{2 -} storage node N₃ - storage node N₄", where j is every integer from 1 to M. When the distributed block storage system is initialized, the storage nodes are assigned. Subsequently, as a quantity of hard disks in the distributed block storage system changes, the storage nodes are adjusted. The client stores the partition view.

Based on a reliability requirement of the distributed block storage system, data reliability can be improved by using an erasure coding (Erasure Coding, EC) algorithm such as using a 3+1 mode, that is, a stripe includes three data strips and one check strip. In the embodiments of the present invention, a partition stores data in a stripe form, and one partition includes R stripes Si, where i is every integer from 1 to R. In the embodiments of the present invention, P2 is used as an example for description.

The distributed block storage system performs fragment management on a hard disk by using 4 KB as a unit, and records assignment information of each fragment of 4 KB in a metadata management area of the hard disk, and a storage resource pool includes fragments of the hard disk. The distributed block storage system includes a stripe metadata server, and in a specific implementation, a stripe metadata management program may be run on one or more servers in the distributed block storage system. The stripe metadata server assigns a stripe to a partition. Still using the partition view shown in FIG. 4 as an example, the stripe metadata server assigns, to a stripe Sᵢ of a partition P2 based on the partition view and as shown in FIG. 5, a physical storage address, that is, storage space, of a strip SUᵢⱼ in the stripe from a storage node Nⱼ corresponding to the partition, and the assigning specifically includes: assigning a physical storage address to SUᵢₗ from a storage node N₁, assigning a physical storage address to SUᵢ₂ from a storage node N₂, assigning a physical storage address to SUᵢ₃ from a storage node N₃, and assigning a physical storage address to SUᵢ₄ from a storage node N₄. The storage node Nⱼ records a mapping between an identifier of a strip SUᵢⱼ and a physical storage address. The stripe metadata server assigns a physical address to a strip in a stripe from a storage node, and the physical address may be assigned in advance when the distributed block storage system is initialized, or be assigned in advance before the client sends data to the storage node. In the embodiments of the present invention, the strip SUᵢⱼ in the stripe Si is only a segment of storage space before the client writes data. When receiving data, the client performs division based on a size of the strip SUᵢⱼ in the stripe Si to obtain data of the strip SUᵢⱼ, that is, the strip SUᵢⱼ included in the stripe Si is used to store the data of the strip SUᵢⱼ obtained by dividing data by the client. To reduce a quantity of strip identifiers managed by the stripe metadata server, the stripe metadata server assigns a version number to an identifier of a strip in a stripe. After a stripe is released, a version number of a strip identifier of a strip in the released stripe is updated, so as to serve as a strip identifier of a strip in a new stripe. The stripe metadata server assigns a physical storage address to the strip SUᵢⱼ in the stripe Sᵢ from the storage node Nⱼ in advance, and a waiting time of a client before the client writes data may be reduced, thereby improving write performance of the distributed block storage system.

In the embodiments of the present invention, a logical unit assigned by the distributed block storage system is mounted to the client, thereby performing a data access operation. The logical unit is also referred to as a logical unit number (Logical Unit Number, LUN). In the distributed block storage system, one logical unit may be mounted to only one client; or one logical unit may be mounted to a plurality of clients, that is, a plurality of clients share one logical unit. The logical unit is provided by the storage resource pool shown in FIG. 2.

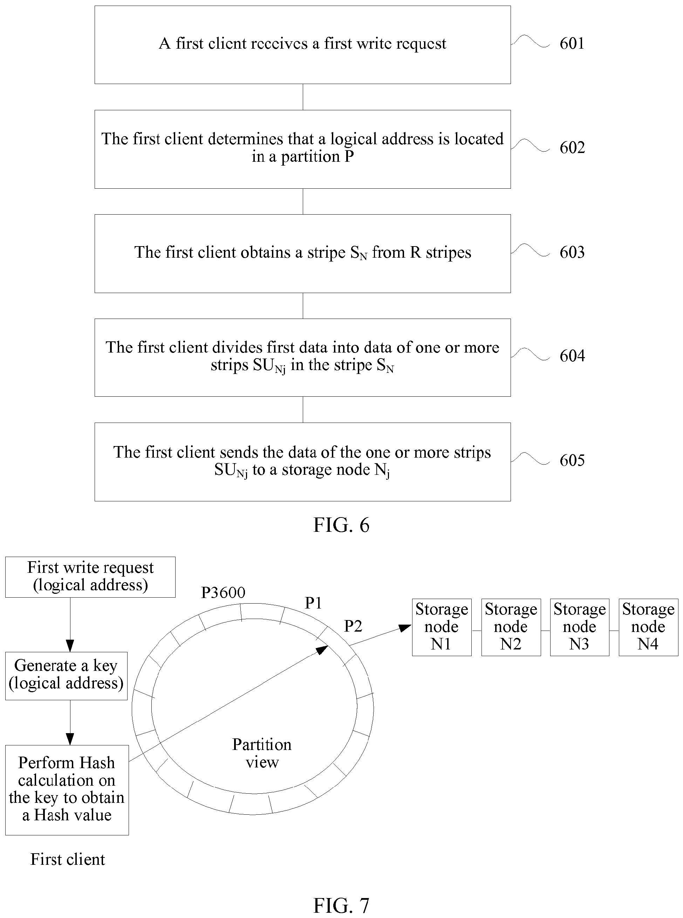

In an embodiment of the present invention, as shown in FIG. 6, a first client performs the following steps.

Step 601: The first client receives a first write request, where the first write request includes first data and a logical address.

In a distributed block storage system, the first client may be a VM or a server. An application program is run on the first client, and the application program accesses a logical unit mounted to the first client, for example, sends the first write request to the logical unit. The first write request includes the first data and the logical address, and the logical address is also referred to as a logical block address (Logical Block Address, LBA). The logical address is used to indicate a write location of the first data in the logical unit.

Step 602: The first client determines that the logical address is located in a partition P.

In this embodiment of the present invention, a partition P2 is used as an example. With reference to FIG. 4, the first client stores a partition view of the distributed block storage system. As shown in FIG. 7, the first client determines, based on the partition view, a partition in which the logical address included in the first write request is located. In an implementation, the first client generates a key key based on the logical address, calculates a Hash value of the key based on a Hash algorithm, and determines a partition corresponding to the Hash value, thereby determining that the logical address is located in the partition P2. This also means that the first data is located in the partition P2.

Step 603: The first client obtains a stripe S_{N} from R stripes, where N is an integer from 1 to R.

A stripe metadata server manages a correspondence between a partition and a stripe, and a relationship between a strip in a stripe and a storage node. In an implementation in which the first client obtains a stripe S_{N} from R stripes, the first client determines that the logical address is located in the partition P2, and the first client queries the stripe metadata server to obtain a stripe S_{N} of the R stripes included in the partition P2. Because the logical address is an address at which the data written by the client is stored in the distributed block storage system, that the logical address is located in the partition P and that the first data is located in the partition P have a same meaning. In another implementation in which the first client obtains a stripe S_{N} from R stripes, the first client may obtain a stripe S_{N} from stripes that are assigned to the first client and that are of the R stripes.

Step 604: The first client divides the first data into data of one or more strips SU_{Nj} in the stripe S_{N}.

The stripe S_{N} includes strips, and the first client receives the first write request, buffers the first data included in the first write request, and divides the buffered data based on a size of a strip in the stripe. For example, the first client performs division based on a length of the strip in the stripe to obtain strip size data, and performs a modulo operation on a quantity M (such as four) of storage nodes in the partition based on a logical address of the strip size data, thereby determining a location of the strip size data in the stripe, that is, a corresponding strip SU_{Nj}, and then determines a storage node Nⱼ corresponding to the strip SU_{Nj} based on the partition view, so that data of strips having a same logical address is located in a same storage node. For example, the first data is divided into data of one or more strips SU_{Nj}. In this embodiment of the present invention, P2 is used as an example. With reference to FIG. 5, the stripe S_{N} includes four strips: SU_{N1}, SU_{N2}, SU_{N3}, and SU_{N4}. An example in which the first data is divided into data of two strips is used, that is, the data of two strips is data of SU_{N1} and data of SU_{N2}. Data of the strip SU_{N3} may be obtained by dividing data in another write request sent by the first client. For details, refer to the description of the first write request. Then, data of the check strip SU_{N4} is generated based on the data of SU_{N1}, the data of SU_{N2}, and the data of SU_{N3}, and the data of the check strip SU_{N4} is also referred to as check data. For how to generate the data of the check strip based on the data of the data strips in the stripe, refer to an existing stripe implementation algorithm. Details are not described again in this embodiment of the present invention.

In this embodiment of the present invention, the stripe S_{N} includes four strips, that is, three data strips and one check strip. When the first client buffers data and needs to write the data to a storage node after a period of time, but cannot make data of the data strips full, for example, there are only the data of the strip SU_{N1} and the data of SU_{N2} obtained by dividing the first data, the check strip is generated based on the data of SU_{N1} and the data of SU_{N2}. Data of a valid data strip SU_{Nj} includes data strip status information of the stripe S_{N}, and the valid data strip SU_{Nj} is a strip whose data is not empty. In this embodiment of the present invention, both the data of the valid data strip SU_{N1} and the data of SU_{N2} include the data strip status information of the stripe S_{N}, and the data strip status information is used to identify whether each data strip of the stripe S_{N} is empty. For example, if 1 is used to indicate that a data strip is not empty, and 0 is used to indicate that a data strip is empty, the data strip status information included in the data of SU_{N1} is 110, and the data strip status information included in the data of SU_{N2} is 110, indicating that SU_{N1} is not empty, SU_{N2} is not empty, and SU_{N3} is empty. The data of the check strip SU_{N4} generated based on the data of SU_{N1} and the data of SU_{N2} includes check data of the data strip status information. Because SU_{N3} is empty, the first client does not need to replace the data of SU_{N3} with all-0 data and write the all-0 data to a storage node N₃, thereby reducing a data write amount. When reading the stripe S_{N}, the first client determines, based on the data strip status information of the stripe S_{N} included in the data of the data strip SU_{N1} or the data of SU_{N2}, that the data of SU_{N3} is empty.

When SU_{N3} is not empty, the data strip status information included in the data of SU_{N1}, the data of SU_{N2}, and the data of SU_{N3} in this embodiment of the present invention is 111, and the data of the check strip SU_{N4} generated based on the data of SU_{N1}, the data of SU_{N2}, and the data of SU_{N3} includes check data of the data strip status information.

Further, in this embodiment of the present invention, the data of the data strip SU_{Nj} further includes at least one of an identifier of the first client and a time stamp TP_{N} at which the first client obtains the stripe S_{N}, that is, includes any one of or a combination of the identifier of the first client and the time stamp TP_{N} at which the first client obtains the stripe S_{N}. When data of a check strip SU_{Nj} is generated based on the data of the data strip SU_{Nj}, the data of the check strip SU_{Nj} also includes check data of at least one of the identifier of the first client and the time stamp TP_{N} at which the first client obtains the stripe S_{N}.

In this embodiment of the present invention, the data of the data strip SU_{Nj} further includes metadata such as an identifier of the data strip SU_{Nj}, and a logical address of the data of the data strip SU_{Nj}.

Step 605: The first client sends the data of the one or more strips SU_{Nj} to a storage node Nⱼ.

In this embodiment of the present invention, the first client sends the data of SU_{N1} obtained by dividing the first data to the storage node N₁, and sends the data of SU_{N2} obtained by dividing the first data to the storage node N₂. The first client may concurrently send the data of the strip SU_{Nj} of the stripe S_{N} to the storage node Nⱼ without needing a primary storage node, so as to reduce data exchange between the storage nodes, and improve write concurrency, thereby improving write performance of the distributed block storage system.

Further, if a logical unit is mounted to only the first client, the first client receives a second write request, where the second write request includes second data and the logical address that is described in FIG. 6; the first client determines, based on the algorithm described in the process in FIG. 6, that the logical address is located in the partition P2; the first client obtains a stripe S_{Y} from the R stripes; the first client divides the second data into data of one or more strips SU_{Yj} in the stripe Sy, such as data of SU_{Y1} and data of SU_{Y2}; and the first client sends the data of the one or more strips SU_{Yj} to the storage node Nⱼ, that is, sends the data of SU_{Y1} to the storage node N₁, and sends the data of SU_{Y2} to the storage node N₂, where Y is an integer from 1 to R, and N is different from Y. In this embodiment of the present invention, that the logical address is located in the partition P and that the second data is located in the partition P have a same meaning. Further, data of a valid data strip SU_{Yj} includes data strip status information of the stripe S_{Y}. Further, the data of the data strip SU_{Yj} further includes at least one of an identifier of the first client and a time stamp TP_{Y} at which the first client obtains the stripe S_{Y}. Further, the data of the data strip SU_{Yj} further includes metadata of the data of the data strip SU_{Yj}, such as an identifier of the strip SU_{Yj}, and a logical address of the data of the strip SU_{Yj}. For a further description, refer to the description of the first client in FIG. 6. Details are not described herein again. For the meaning of obtaining, by the first client, the stripe S_{Y} from the R stripes, refer to the meaning of obtaining, by the first client, the stripe S_{N} from the R stripes. Details are not described herein again.

Further, if a logical unit is mounted to a plurality of clients, for example, mounted to the first client and a second client, the second client receives a third write request, where the third write request includes third data and the logical address that is described in FIG. 6. The second client determines, based on the algorithm described in the process in FIG. 6, that the logical address is located in the partition P2; the second client obtains a stripe S_{K} from the R stripes; the second client divides the third data into data of one or more strips SU_{Kj} in the stripe S_{K}, such as data of SU_{K1} and data of SU_{K2}; and the second client sends the data of the one or more strips SU_{Kj} to the storage node Nⱼ, that is, sends the data of SU_{K1} to the storage node N₁, and sends the data of SU_{K2} to the storage node N₂, where K is an integer from 1 to R, and N is different from K. That the logical address is located in the partition P and that the third data is located in the partition P have a same meaning. For the meaning of obtaining, by the second client, the stripe S_{K} from the R stripes, refer to the meaning of obtaining, by the first client, the stripe S_{N} from the R stripes. Details are not described herein again. Further, data of a valid data strip SU_{Kj} includes data strip status information of the stripe S_{K}. Further, the data of the data strip SU_{Kj} further includes at least one of an identifier of the second client and a time stamp TP_{K} at which the second client obtains the stripe S_{K}. Further, the data of the data strip SU_{Kj} further includes metadata such as an identifier of the data strip SU_{Kj}, and a logical address of the data of the data strip SU_{Kj}. For a further description of the second client, refer to the description of the first client in FIG. 6. Details are not described herein again.

In the prior art, a client needs to first send data to a primary storage node, and the primary storage node divides the data into data of strips, and sends data of strips other than a strip stored in the primary storage node to corresponding storage nodes. As a result, the primary storage node becomes a data storage bottleneck in a distributed block storage system, and data exchange between the storage nodes is increased. However, in the embodiment shown in FIG. 6, the client divides the data into the data of the strips, and sends the data of the strips to the corresponding storage nodes without needing a primary storage node, so as to alleviate a pressure of the primary storage node, reduce data exchange between the storage nodes, and the data of the strips of the stripe is concurrently written to the corresponding storage nodes, so as to also improve write performance of the distributed block storage system.

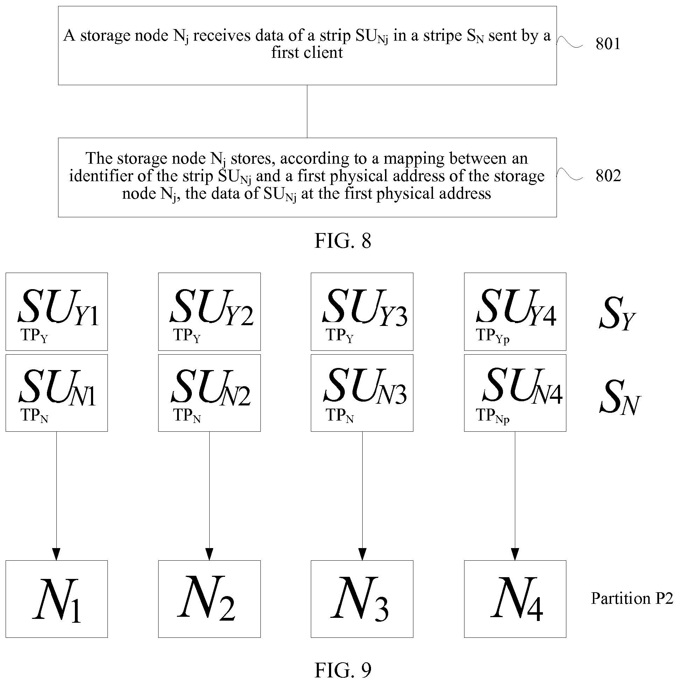

Corresponding to the embodiment of the first client shown in FIG. 6, as shown in FIG. 8, a storage node Nⱼ performs the following steps.

Step 801: The storage node Nⱼ receives data of a strip SU_{Nj} in a stripe S_{N} sent by a first client.

With reference to the embodiment shown in FIG. 6, a storage node N₁ receives data of SU_{N1} sent by the first client, and a storage node N₂ receives data of SU_{N2} sent by the first client.

Step 802: The storage node Nⱼ stores, based on a mapping between an identifier of the strip SU_{Nj} and a first physical address of the storage node Nⱼ, the data of SU_{Nj} at the first physical address.

A stripe metadata server assigns, in the storage node Nⱼ, the first physical address to the strip SU_{Nj} of the stripe S_{N} in a partition in advance based on a partition view, metadata of the storage node Nⱼ stores the mapping between the identifier of the strip SU_{Nj} and the first physical address of the storage node Nⱼ, and the storage node Nⱼ receives the data of the strip SU_{Nj}, and stores the data of the strip SU_{Nj} at the first physical address based on the mapping. For example, the storage node N₁ receives the data of SU_{N1} sent by the first client, and stores the data of SU_{N1} at the first physical address of N₁, and the storage node N₂ receives the data of SU_{N2} sent by the first client, and stores the data of SU_{N2} at the first physical address of N₂.

In the prior art, a primary storage node needs data sent by a client, divides the data into data of data strips in a stripe, forms data of a check strip based on the data of the data strips, and sends data of strips stored in other storage nodes to corresponding storage nodes. However, in this embodiment of the present invention, the storage node Nⱼ receives only the data of the strip SU_{Nj} sent by the client without needing a primary storage node, so as to reduce data exchange between storage nodes, and data of strips is concurrently written to the corresponding storage nodes, so as to improve write performance of a distributed block storage system.

Further, the data of the strip SU_{Nj} is obtained by dividing first data, a first write request includes a logical address of the first data, and the data of the strip SU_{Nj} used as a part of the first data also has a corresponding logical address. Therefore, the storage node Nⱼ establishes a mapping between the logical address of the data of the strip SU_{Nj} and the identifier of the strip SU_{Nj}. In this way, the first client still accesses the data of the strip SU_{Nj} by using the logical address. For example, when the first client accesses the data of the strip SU_{Nj}, the first client performs a modulo operation on a quantity M (such as four) of storage nodes in a partition P by using the logical address of the data of the strip SU_{Nj}, determines that the strip SU_{Nj} is located in the storage node Nⱼ, and sends a read request carrying the logical address of the data of the strip SU_{Nj} to the storage node Nⱼ, the storage node Nⱼ obtains the identifier of the strip SU_{Nj} based on the mapping between the logical address of the data of the strip SU_{Nj} and the identifier of the strip SU_{Nj}, and the storage node Nⱼ obtains the data of the strip SU_{Nj} based on the mapping between the identifier of the strip SU_{Nj} and the first physical address of the storage node Nⱼ.

With reference to the embodiment shown in FIG. 6 and the related description, further, the storage node Nⱼ receives data of a strip SU_{Yj} in a stripe S_{Y} sent by the first client. For example, the storage node N₁ receives data of SU_{Y1} sent by the first client, and the storage node N₂ receives data of SU_{Y2} sent by the first client. The storage node Nⱼ stores, based on a mapping between an identifier of the strip SU_{Yj} and a second physical address of the storage node Nⱼ, the data of SU_{Yj} at the second physical address, for example, stores the data of SU_{Y1} at a second physical address of N₁, and stores the data of SU_{Y2} at a second physical address of N₂. The data of the strip SU_{Yj} used as a part of second data also has a corresponding logical address, and therefore, the storage node Nⱼ establishes a mapping between the logical address of the data of the strip SU_{Yj} and the identifier of the strip SU_{Yj}. In this way, the first client still accesses the data of the strip SU_{Yj} by using the logical address. The data of the strip SU_{Yj} and the data of the strip SU_{Nj} have the same logical address.

With reference to the embodiment shown in FIG. 6 and the related description, when a logical unit is mounted to the first client and the second client, further, the storage node Nⱼ receives data of a strip SU_{Kj} in a stripe S_{K} sent by the second client. For example, the storage node N₁ receives data of SU_{K1} sent by the second client, and the storage node N₂ receives data of SU_{K2} sent by the second client. The storage node Nⱼ stores, based on a mapping between an identifier of the strip SU_{Kj} and a third physical address of the storage node Nⱼ, the data of SU_{Kj} at the third physical address, for example, stores the data of SU_{K1} at a third physical address of N₁, and stores the data of SU_{K2} at a third physical address of N₂. The data of the strip SU_{Kj} used as a part of third data also has a corresponding logical address, and therefore, the storage node Nⱼ establishes a mapping between the logical address of the data of the strip SU_{Kj} and the identifier of the strip SU_{Kj}. In this way, the second client still accesses the data of the strip SU_{Kj} by using the logical address. The data of the strip SU_{Kj} and the data of the strip SU_{Nj} have the same logical address.

Further, the storage node Nⱼ assigns a time stamp TP_{Nj} to the data of the strip SU_{Nj}, the storage node Nⱼ assigns a time stamp TP_{Kj} to the data of the strip SU_{Kj}; and the storage node Nⱼ assigns a time stamp TP_{Yj} to the data of the strip SU_{Yj}. The storage node Nⱼ may eliminate, based on the time stamps, strip data, corresponding to an earlier time, in strip data that has a same logical address in a buffer, and reserve latest strip data, thereby saving buffer space.

With reference to the embodiment shown in FIG. 6 and the related description, when a logical unit is mounted to only the first client, the data of the strip SU_{Nj} sent by the first client to the storage node Nⱼ includes the time stamp TP_{N} at which the first client obtains the stripe S_{N}, and the data of the strip SU_{Yj} sent by the first client to the storage node Nⱼ includes the time stamp TP_{Y} at which the first client obtains the stripe S_{Y}. As shown in FIG. 9, none of data strips of a stripe S_{N} is empty, each of data of SU_{N1}, data of SU_{N2}, and data of SU_{N3} includes the time stamp TP_{N} at which the first client obtains the stripe S_{N}, and data of a check strip SU_{N4} of the stripe S_{N} includes check data TP_{Np} of the time stamp TP_{N}; and none of data strips of the stripe S_{Y} is empty, each of data of SU_{Y1}, data of SU_{Y2}, and data of SU_{Y3} includes the time stamp TP_{Y} at which the first client obtains the stripe S_{Y}, and data of a check strip SU_{Y4} of the stripe S_{Y} includes check data TP_{Yp} of the time stamp TP_{Y}. Therefore, after a storage node storing a data strip is faulty, the distributed block storage system recovers, in a new storage node based on the stripes and the partition view, the data of the strip SU_{Nj} of the stripe S_{N} in the faulty storage node Nⱼ, and recovers the data of the strip SU_{Yj} of the stripe S_{Y} in the faulty storage node Nⱼ. Therefore, a buffer of the new storage node includes the data of the strip SU_{Nj} and the data of SU_{Yj}. The data of SU_{Nj} includes the time stamp TP_{N}, and the data of SU_{Yj} includes the time stamp TP_{Y}. Because both the time stamp TP_{N} and the time stamp TP_{Y} are assigned by the first client or assigned by a same time stamp server, the time stamps may be compared. The new storage node eliminates, from the buffer based on the time stamp TP_{N} and the time stamp TP_{Y}, strip data corresponding to an earlier time. The new storage node may be a storage node obtained by recovering the faulty storage node Nⱼ, or a storage node of a partition in which a newly added stripe is located in the distributed block storage system. In this embodiment of the present invention, an example in which the storage node N₁ is faulty is used, and the buffer of the new storage node includes the data of the strip SU_{N1} and the data of SU_{Y1}. The data of SU_{N1} includes the time stamp TP_{N}, the data of SU_{Y1} includes the time stamp TP_{Y}, and the time stamp TP_{N} is earlier than the time stamp TP_{Y}. Therefore, the new storage node eliminates the data of the strip SU_{N1} from the buffer, and reserves latest strip data in the storage system, thereby saving buffer space. The storage node Nⱼ may eliminate, based on time stamps assigned by a same client, strip data, corresponding to an earlier time, in strip data that is from the same client and that has a same logical address in the buffer, and reserve latest strip data, thereby saving buffer space.

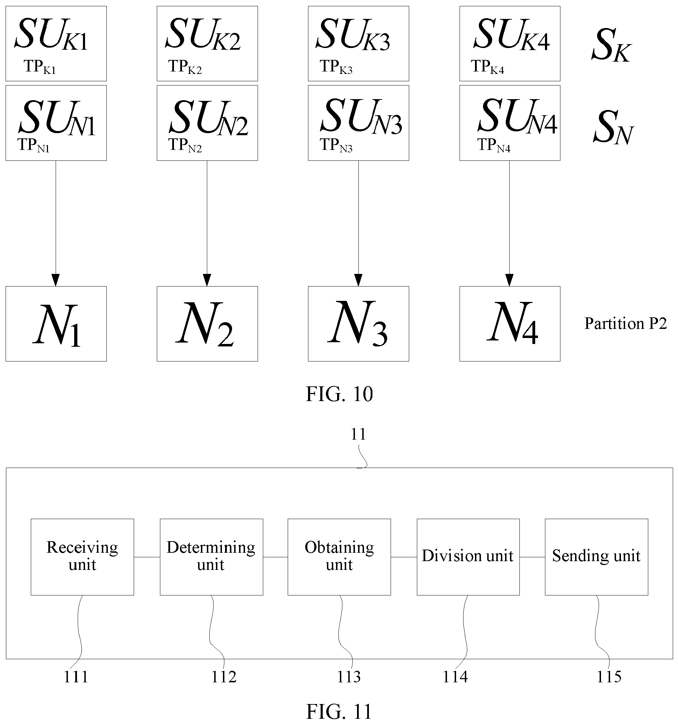

With reference to the embodiment shown in FIG. 6 and the related description, when a logical unit is mounted to the first client and the second client, the storage node Nⱼ assigns a time stamp TP_{Nj} to the data of the strip SU_{Nj} sent by the first client, and the storage node Nⱼ assigns the time stamp TP_{Kj} to the data of the strip SU_{Kj} sent by the second client. As shown in FIG. 10, none of data strips of a stripe S_{N} is empty, a time stamp assigned by a storage node N₁ to data of a strip SU_{N1} is TP_{N1}, a time stamp assigned by a storage node N₂ to data of a strip SU_{N2} is TP_{N2}, a time stamp assigned by a storage node N₃ to data of a strip SU_{N3} is TP_{N3}, and a time stamp assigned by a storage node N₄ to data of a strip SU_{N4} is TP_{N4}; and none of data strips of a stripe S_{K} is empty, a time stamp assigned by the storage node N₁ to data of a strip SU_{K1} is TP_{K1}, a time stamp assigned by the storage node N₂ to data of a strip SU_{K2} is TP_{K2}, a time stamp assigned by the storage node N₃ to data of a strip SU_{K3} is TP_{K3}, and a time stamp assigned by the storage node N₄ to data of a strip SU_{K4} is TP_{K4}. Therefore, after a storage node storing a data strip is faulty, the distributed block storage system recovers, based on the stripes and the partition view, the data of the strip SU_{Nj} of the stripe S_{N} in the faulty storage node Nⱼ, and recovers the data of the strip SU_{Kj} of the stripe S_{K} in the faulty storage node Nⱼ; a buffer of a new storage node includes the data of the strip SU_{Nj} and the data of SU_{Kj}. In an implementation, when the data of the strip SU_{Nj} includes the time stamp TP_{N} assigned by the first client, the data of the strip SU_{Kj} includes the time stamp TP_{K} assigned by the second client, and TP_{N} and TP_{K} are assigned by a same time stamp server, the time stamp TP_{N} of the data of the strip SU_{Nj} may be directly compared with the time stamp TP_{K} of the data of SU_{Kj}, and the new storage node eliminates, from the buffer based on the time stamp TP_{N} and the time stamp TP_{K}, strip data corresponding to an earlier time. When the data of the strip SU_{Nj} does not include the time stamp TP_{N} assigned by the first client and/or the data of the strip SU_{Kj} does not include the time stamp TP_{K} assigned by the second client, or when the time stamps TP_{N} and TP_{K} are not from a same time stamp server, the buffer of the new storage node includes the data of the strip SU_{Nj} and the data of SU_{Kj}. The new storage node may query for time stamps of data of strips of stripes S_{N} and S_{K} in a storage node Nx. For example, the new storage node obtains a time stamp TP_{NX} assigned by the storage node Nx to data of a strip SU_{NX}, and uses TP_{NX} as a reference time stamp of the data of SU_{Nj}, and the new storage node obtains a time stamp TP_{KX} assigned by the storage node Nx to data of a strip SU_{KX}, and uses TP_{KX} as a reference time stamp of the data of SU_{Kj}, and the new storage node eliminates, from the buffer based on the time stamp TP_{NX} and the time stamp TP_{KX}, strip data, corresponding to an earlier time, in the data of the strip SU_{Nj} and the data of SU_{Kj}, where X is any integer from 1 to M other than j. In this embodiment of the present invention, an example in which the storage node N₁ is faulty is used, and the buffer of the new storage node includes the data of the strip SU_{N1} and the data of SU_{K1} . The new storage node obtains a time stamp TP_{N2} assigned by the storage node N₂ to the data of SU_{N2} as a reference time stamp of the data of SU_{N1}, and obtains a time stamp TP_{K2} assigned by the storage node N₂ to the data of SU_{K2} as a reference time stamp of the data of SU_{K1}, and the time stamp TP_{N2} is earlier than the time stamp TP_{K2}. Therefore, the new storage node eliminates the data of the strip SU_{N1} from the buffer, and reserves latest strip data in the storage system, thereby saving buffer space. In this embodiment of the present invention, the storage node Nⱼ also assigns a time stamp TP_{Yj} to the data of the strip SU_{Yj}.

A time stamp assigned by the storage node Nⱼ may be from a time stamp server, or may be generated by the storage node Nⱼ.

Further, an identifier of the first client included in the data of the data strip SU_{Nj}, a time stamp at which the first client obtains the stripe S_{N}, an identifier of the data strip SU_{Nj}, a logical address of the data of the data strip SU_{Nj}, and data strip status information may be stored at an extension address of a physical address assigned by the storage node Nⱼ to the data strip SU_{Nj}, thereby avoiding use of a physical address of the storage node Nⱼ. The extension address of the physical address is a physical address that is invisible beyond a valid physical address capacity of the storage node Nⱼ, and when receiving a read request for accessing the physical address, the storage node Nⱼ reads data in the extension address of the physical address by default. An identifier of the second client included in the data of the data strip SU_{Kj}, a time stamp at which the second client obtains the stripe S_{K}, an identifier of the data strip SU_{Kj}, a logical address of the data of the data strip SU_{Kj}, and data strip status information may also be stored at an extension address of a physical address assigned by the storage node Nⱼ to the data strip SU_{Kj}. Likewise, an identifier of the first client included in the data strip SU_{Yj}, a time stamp at which the first client obtains the stripe Sy, an identifier of the data strip SU_{Yj}, a logical address of the data of the data strip SU_{Yj}, and data strip status information may also be stored at an extension address of a physical address assigned by the storage node Nⱼ to the data strip SU_{Yj}.

Further, the time stamp TP_{Nj} assigned by the storage node Nⱼ to the data of the strip SU_{Nj} may also be stored at the extension address of the physical address assigned by the storage node Nⱼ to the data strip SU_{Nj}. The time stamp TP_{Kj} assigned by the storage node Nⱼ to the data of the strip SU_{Kj} may also be stored at the extension address of the physical address assigned by the storage node Nⱼ to the data strip SU_{Kj}. The time stamp TP_{Yj} assigned by the storage node Nⱼ to the data of the strip SU_{Yj} may also be stored at the extension address of the physical address assigned by the storage node Nⱼ to the data strip SU_{Yj}.

With reference to various implementations of the embodiments of the present invention, an embodiment of the present invention provides an apparatus 11 for writing data, applied to a distributed block storage system in the embodiments of the present invention. As shown in FIG. 11, the apparatus 11 for writing data includes a receiving unit 111, a determining unit 112, an obtaining unit 113, a division unit 114, and a sending unit 115. The receiving unit 111 is configured to receive a first write request, where the first write request includes first data and a logical address. The determining unit 112 is configured to determine that the logical address is located in a partition P. The obtaining unit 113 is configured to obtain a stripe S_{N} from R stripes, where N is an integer from 1 to R. The division unit 114 is configured to divide the first data into data of one or more strips SU_{Nj} in the stripe S_{N}. The sending unit 115 is configured to send the data of the one or more strips SU_{Nj} to a storage node Nⱼ. Further, the receiving unit 111 is further configured to receive a second write request, where the second write request includes second data and a logical address, and the logical address of the second data is the same as the logical address of the first data. The determining unit 112 is further configured to determine that the logical address is located in the partition P. The obtaining unit 113 is further configured to obtain a stripe S_{Y} from the R stripes, where Y is an integer from 1 to R, and N is different from Y. The division unit 114 is further configured to divide the second data into data of one or more strips SU_{Yj} in the stripe S_{Y}. The sending unit 115 is further configured to send the data of the one or more strips SU_{Yj} to the storage node Nⱼ. For an implementation of the apparatus 11 for writing data in this embodiment of the present invention, refer to clients in the embodiments of the present invention, such as a first client and a second client. Specifically, the apparatus 11 for writing data may be a software module, and may be run on a client, so that the client completes various implementations described in the embodiments of the present invention. Alternatively, the apparatus 11 for writing data may be a hardware device. For details, refer to the structure shown in FIG. 3. Units of the apparatus 11 for writing data may be implemented by the processor of the server described in FIG. 3. Therefore, for a detailed description about the apparatus 11 for writing data, refer to the descriptions of the clients in the embodiments of the present invention.

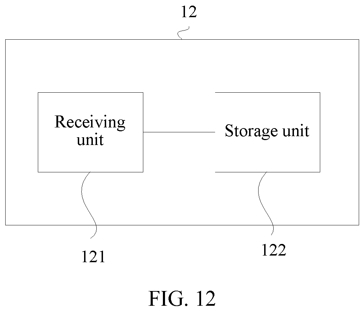

With reference to various implementations of the embodiments of the present invention, an embodiment of the present invention provides an apparatus 12 for storing data, applied to a distributed block storage system in the embodiments of the present invention. As shown in FIG. 12, the apparatus 12 for storing data includes a receiving unit 121 and a storage unit 122. The receiving unit 121 is configured to receive data of a strip SU_{Nj} in a stripe S_{N} sent by a first client, where the data of the strip SU_{Nj} is obtained by dividing first data by the first client; the first data is obtained by receiving a first write request by the first client; the first write request includes first data and a logical address; and the logical address is used to determine that the first data is located in a partition P. The storage unit 122 is configured to store, based on a mapping between an identifier of the strip SU_{Nj} and a first physical address of the storage node Nⱼ, the data of SU_{Nj} at the first physical address.

With reference to FIG. 12, the apparatus 12 for storing data further includes an assignment unit, configured to assign a time stamp TP_{Nj} to the data of the strip SU_{Nj}.

Further, with reference to FIG. 12, the apparatus 12 for storing data further includes an establishment unit, configured to establish a correspondence between a logical address of the data of the strip SU_{Nj} and the identifier of the strip SU_{Nj}.

Further, with reference to FIG. 12, the receiving unit 121 is further configured to receive data of a strip SU_{Yj} in a stripe Sy sent by the first client, where the data of the strip SU_{Yj} is obtained by dividing second data by the first client; the second data is obtained by receiving a second write request by the first client; the second write request includes second data and a logical address; and the logical address is used to determine that the second data is located in the partition P. The storage unit 122 is further configured to store, based on a mapping between an identifier of a strip SU_{Y} and a second physical address of the storage node Nⱼ, the data of SU_{Yj} at the second physical address. Further, with reference to FIG. 12, the assignment unit is further configured to assign a time stamp TP_{Yj} to the data of the strip SU_{Yj}.

Further, with reference to FIG. 12, the establishment unit is further configured to establish a correspondence between a logical address of the data of the strip SU_{Yj} and an identifier of the strip SU_{Yj}. Further, the data of SU_{Yj} includes at least one of an identifier of the first client and a time stamp TP_{Y} at which the first client obtains the stripe S_{Y}.

Further, with reference to FIG. 12, the receiving unit 121 is further configured to receive data of a strip SU_{Kj} in a stripe S_{K} sent by a second client, where the data of the strip SU_{Kj} is obtained by dividing third data by the second client; the third data is obtained by receiving a third write request by the second client; the third write request includes third data and a logical address; and the logical address is used to determine that the third data is located in the partition P. The storage unit 122 is further configured to store, based on a mapping between an identifier of a strip SU_{Kj} and a third physical address of the storage node Nⱼ, the data of SU_{Kj} at the third physical address. Further, the assignment unit is further configured to assign a time stamp TP_{K} to the strip SU_{Kj}. Further, the establishment unit is further configured to establish a correspondence between a logical address of the data of the strip SU_{Kj} and an identifier of the strip SU_{Kj}. Further, the apparatus 12 for storing data further includes a recovery unit, configured to: after the storage node Nⱼ is faulty, recover the data of the strip SU_{Nj} based on the stripe S_{N} and recover the data of the strip SU_{Kj} based on the stripe S_{K}. The apparatus 12 for storing data further includes an obtaining unit, configured to: obtain a time stamp TP_{NX} of data of a strip SU_{NX} in a storage node Nx as a reference time stamp of the data of the strip SU_{Nj}, and obtain a time stamp TP_{KX} of data of a strip SU_{KX} in the storage node Nx as a reference time stamp of the data of the strip SU_{Kj}. The apparatus 12 for storing data further includes an elimination unit, configured to: eliminate, from a buffer of the new storage node based on the time stamp TP_{NX} and the time stamp TP_{KX}, strip data, corresponding to an earlier time, in the data of the strip SU_{Nj} and the data of SU_{Kj}, where X is any integer from 1 to M other than j.

For an implementation of the apparatus 12 for storing data in this embodiment of the present invention, refer to a storage node in the embodiments of the present invention, such as a storage node Nⱼ. Specifically, the apparatus 12 for storing data may be a software module, and may be run on a server, so that the storage node completes various implementations described in the embodiments of the present invention. Alternatively, the apparatus 12 for storing data may be a hardware device. For details, refer to the structure shown in FIG. 3. Units of the apparatus 12 for storing data may be implemented by the processor of the server described in FIG. 3. Therefore, for a detailed description about the apparatus 12 for storing data, refer to the description of the storage node in the embodiments of the present invention.

In this embodiment of the present invention, in addition to a stripe generated based on an EC algorithm described above, the stripe may be a stripe generated based on a multi-copy algorithm. When the stripe is a stripe generated based on the EC algorithm, the strips SUᵢⱼ in the stripe include a data strip and a check strip. When the stripe is a stripe generated based on the multi-copy algorithm, all the strips SUᵢⱼ in the stripe are data strips, and the strips SUᵢⱼ have same data.

Correspondingly, an embodiment of the present invention further provides a computer readable storage medium and a computer program product, and the computer readable storage medium and the computer program product include a computer instruction used to implement various solutions described in the embodiments of the present invention.

In the several embodiments provided in the present invention, it should be understood that the disclosed apparatus and method may be implemented in other manners. For example, the unit division in the described apparatus embodiment is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions in the embodiments.

In addition, functional units in the embodiments of the present invention may be integrated into one processing unit, or each of the units may exist alone physically, or two or more units are integrated into one unit.

## Claims

1. A method for storing data in a distributed block storage system, wherein the distributed block storage system comprises a partition P, the partition P comprises M storage nodes Nⱼ and R stripes Sᵢ, and each stripe comprises strips SUᵢⱼ, wherein j is every integer from 1 to M, and i is every integer from 1 to R; and the method comprises:
receiving (801), by a storage node Nⱼ, data of a strip SU_{Nj} in a stripe S_{N} sent by a first client, wherein the data of the strip SU_{Nj} is obtained by dividing first data by the first client; the first data is obtained by receiving a first write request by the first client; the first write request comprises the first data and a logical address; and the logical address is used to determine that the first data is located in the partition P; and
storing (802), by the storage node Nj based on a mapping between an identifier of the strip SU_{Nj} and a first physical address of the storage node Nⱼ, the data of SU_{Nj} at the first physical address; and
assigning, by the storage node Nⱼ, a time stamp TP_{Nj} to the data of the strip SU_{Nj}, wherein the method further comprises:
establishing, by the storage node Nⱼ, a correspondence between a logical address of the data of the strip SU_{Nj} and the identifier of the strip SU_{Nj}, wherein the method further comprises:
receiving, by the storage node Nⱼ, data of a strip SU_{Kj} in a stripe S_{K} sent by a second client, wherein the data of the strip SU_{Kj} is obtained by dividing third data by the second client; the third data is obtained by receiving a third write request by the second client; the third write request comprises the third data and the logical address; and the logical address is used to determine that the third data is located in the partition P; and
storing, by the storage node Nj based on a mapping between an identifier of a strip SU_{K} and a third physical address of the storage node Nⱼ, the data of SU_{Kj} at the third physical address, wherein the method further comprises:
assigning, by the storage node Nⱼ, a time stamp TP_{Kj} to the data of the strip SU_{Kj}.;
wherein after the storage node Nⱼ is faulty, a new storage node recovers the data of the strip SU_{Nj} based on the stripe S_{N} and recovers the data of SU_{Kj} based on the stripe S_{K}; the new storage node obtains a time stamp TP_{NX} of data of a strip SU_{NX} in a storage node N_{X} as a reference time stamp of the data of the strip SU_{Nj}, and obtains a time stamp TP_{KX} of data of a strip SU_{KX} in the storage node N_{X} as a reference time stamp of the data of the strip SU_{Kj}; and the new storage node eliminates, from a buffer based on the time stamp TP_{NX} and the time stamp TP_{KX}, strip data, corresponding to an earlier time, in the data of the strip SU_{Nj} and the data of SU_{Kj}, wherein X is any integer from 1 to M other than j.

2. The method according to claim 1, wherein the data of SU_{Nj} comprises at least one of an identifier of the first client and a time stamp TP_{N} at which the first client obtains the stripe S_{N}.

3. The method according to any one of claims 1 to 2, wherein the method further comprises:
receiving, by the storage node Nⱼ, data of a strip SU_{Yj} in a stripe S_{Y} sent by the first client, wherein the data of the strip SU_{Yj} is obtained by dividing second data by the first client; the second data is obtained by receiving a second write request by the first client; the second write request comprises the second data and the logical address; and the logical address is used to determine that the second data is located in the partition P; and
storing, by the storage node Nj based on a mapping between an identifier of a strip SU_{Yj} and a second physical address of the storage node Nⱼ, the data of SU_{Yj} at the second physical address.

4. The method according to claim 3, wherein the method further comprises:
assigning, by the storage node Nⱼ, a time stamp TP_{Yj} to the data of the strip SU_{Yj}.

5. The method according to claim 3 or 4, wherein the method further comprises:
establishing, by the storage node Nⱼ, a correspondence between a logical address of the data of the strip SU_{Yj} and an identifier of the strip SU_{Yj}.

6. The method according to any one of claims 3 to 5, wherein the data of SU_{Yj} comprises at least one of the identifier of the first client and a time stamp TP_{Y} at which the first client obtains the stripe S_{Y}.

7. The method according to claim 1, wherein the method further comprises:
establishing, by the storage node Nⱼ, a correspondence between a logical address of the data of the strip SU_{Kj} and an identifier of the strip SU_{Kj}.

8. The method according to claim 1, wherein the data of SU_{Kj} comprises at least one of an identifier of the second client and a time stamp TP_{K} at which the second client obtains the stripe S_{K}.

9. The method according to claim 1, wherein each piece of data of the one or more strips SU_{Nj} further comprises data strip status information, and the data strip status information is used to identify whether each data strip of the stripe S_{N} is empty.

10. An apparatus (11, 12) for storing data in a distributed block storage system, wherein the distributed block storage system comprises a partition P, the partition P comprises M storage nodes Nⱼ and R stripes Sᵢ, and each stripe comprises strips SUᵢⱼ, wherein j is every integer from 1 to M, and i is every integer from 1 to R; and the apparatus for storing data comprises:
a receiving unit (111, 121), configured to receive data of a strip SU_{Nj} in a stripe S_{N} sent by a first client, wherein the data of the strip SU_{Nj} is obtained by dividing first data by the first client; the first data is obtained by receiving a first write request by the first client; the first write request comprises the first data and a logical address; and the logical address is used to determine that the first data is located in the partition P; and
a storage unit (122), configured to store, based on a mapping between an identifier of the strip SU_{Nj} and a first physical address of the storage node Nⱼ, the data of SU_{Nj} at the first physical address;
an assignment unit, configured to assign a time stamp TP_{Nj} to the data of the strip SU_{Nj}, wherein the apparatus for storing data further comprises:
an establishment unit, configured to establish a correspondence between a logical address of the data of the strip SU_{Nj} and the identifier of the strip SU_{Nj}, wherein the receiving unit is further configured to receive data of a strip SU_{Kj} in a stripe S_{K} sent by a second client, wherein the data of the strip SU_{Kj} is obtained by dividing third data by the second client; the third data is obtained by receiving a third write request by the second client; the third write request comprises the third data and the logical address; and the logical address is used to determine that the third data is located in the partition P; and
the storage unit is further configured to store, based on a mapping between an identifier of a strip SU_{K} and a third physical address of the storage node Nⱼ, the data of SU_{Kj} at the third physical address, wherein the assignment unit is further configured to assign a time stamp TP_{Kj} to the data of the strip SU_{Kj}.
wherein the apparatus for storing data further comprises a recovery unit, configured to: after the storage node Nⱼ is faulty, recover the data of the strip SU_{Nj} at a new storage node based on the stripe S_{N} and recover the data of SU_{Kj} at the new storage node based on the stripe S_{K}; the apparatus for storing data further comprises an obtaining unit (113), configured to: obtain a time stamp TP_{NX} of data of a strip SU_{NX} in a storage node N_{X} as a reference time stamp of the data of the strip SU_{Nj}, and obtain a time stamp TP_{KX} of data of a strip SU_{KX} in the storage node N_{X} as a reference time stamp of the data of the strip SU_{Kj}; and the apparatus for storing data further comprises an elimination unit, configured to: eliminate, from a buffer of the new storage node based on the time stamp TP_{NX} and the time stamp TP_{KX}, strip data, corresponding to an earlier time, in the data of the strip SU_{Nj} and the data of SU_{Kj}, wherein X is any integer from 1 to M other than j .

11. The apparatus for storing data according to claim 10, wherein the data of SU_{Nj} comprises at least one of an identifier of the first client and a time stamp TP_{N} at which the first client obtains the stripe S_{N}.

12. The apparatus for storing data according to any one of claims 10 to 11, wherein the receiving unit is further configured to receive data of a strip SU_{Yj} in a stripe S_{Y} sent by the first client, wherein the data of the strip SU_{Yj} is obtained by dividing second data by the first client; the second data is obtained by receiving a second write request by the first client; the second write request comprises the second data and the logical address; and the logical address is used to determine that the second data is located in the partition P; and
the storage unit is further configured to store, based on a mapping between an identifier of a strip SU_{Yj} and a second physical address of the storage node Nⱼ, the data of SU_{Yj} at the second physical address.

13. The apparatus for storing data according to claim 10, wherein the assignment unit is further configured to assign a time stamp TP_{Yj} to the data of the strip SU_{Yj}.

14. The apparatus for storing data according to claim 12 or 13, wherein the establishment unit is further configured to establish a correspondence between a logical address of the data of the strip SU_{Yj} and an identifier of the strip SU_{Yj}.

15. The apparatus for storing data according to any one of claims 12 to 14, wherein the data of SU_{Yj} comprises at least one of the identifier of the first client and a time stamp TP_{Y} at which the first client obtains the stripe S_{Y}.

16. The apparatus for storing data according to claim 10, wherein the establishment unit is further configured to establish a correspondence between a logical address of the data of the strip SU_{Kj} and an identifier of the strip SU_{Kj}.

17. The apparatus for storing data according to any one of claims 10 to 16, wherein the data of SU_{Kj} comprises at least one of an identifier of the second client and a time stamp TP_{K} at which the second client obtains the stripe S_{K}.

18. The apparatus for storing data according to any one of claims 10 to 17, wherein each piece of data of the one or more strips SU_{Nj} further comprises data strip status information, and the data strip status information is used to identify whether each data strip of the stripe S_{N} is empty.

## Patentansprüche

1. Verfahren zum Speichern von Daten in einem verteilten Blockspeichersystem, wobei das verteilte Blockspeichersystem eine Partition P umfasst, die Partition P M Speicherknoten Nⱼ und R "Stripes" Sᵢ umfasst und jeder "Stripe" "Strips" SUᵢⱼ umfasst, wobei j jede Ganzzahl von 1 bis M ist und i jede Ganzzahl von 1 bis R ist und das Verfahren umfasst:
Empfangen (801), durch einen Speicherknoten Nⱼ, von Daten eines "Strip" SU_{Nj} in einem "Stripe" S_{N}, der durch einen ersten Client gesendet wird, wobei die Daten des "Strip" SU_{Nj} durch Teilen von ersten Daten durch den ersten Client erhalten werden; die ersten Daten durch Empfangen einer ersten Schreibanforderung durch den ersten Client erhalten werden; die erste Schreibanforderung die ersten Daten und eine logische Adresse umfasst und die logische Adresse zum Bestimmen, dass sich die ersten Daten in der Partition P befinden, verwendet wird, und
Speichern (802), durch den Speicherknoten Nj basierend auf einer Abbildung zwischen einem Identifikator des "Strip" SU_{Nj} und einer ersten physischen Adresse des Speicherknotens Nⱼ, der Daten von SU_{Nj} an der ersten physischen Adresse und
Zuweisen, durch den Speicherknoten Nⱼ, eines Zeitstempels TP_{Nj} zu den Daten des "Strip" SU_{Nj}, wobei das Verfahren ferner umfasst:
Herstellen, durch den Speicherknoten Nⱼ, einer Übereinstimmung zwischen einer logischen Adresse der Daten des "Strip" SU_{Nj} und dem Identifikator des "Strip" SU_{Nj}, wobei das Verfahren ferner umfasst:
Empfangen, durch den Speicherknoten Nⱼ, von Daten eines "Strip" SU_{Kj} in einem "Stripe" S_{K}, der durch einen zweiten Client gesendet wird, wobei die Daten des "Strip" SU_{Kj} durch Teilen von dritten Daten durch den zweiten Client erhalten werden, die dritten Daten durch Empfangen einer dritten Schreibanforderung durch den zweiten Client erhalten werden;
die dritte Schreibanforderung die dritten Daten und die logische Adresse umfasst und die logische Adresse zum Bestimmen, dass sich die dritten Daten in der Partition P befinden, verwendet wird; und
Speichern, durch den Speicherknoten Nj basierend auf einer Abbildung zwischen einem Identifikator eines "Strip" SU_{K} und einer dritten physischen Adresse des Speicherknotens Nⱼ, der Daten von SU_{Kj} an der dritten physischen Adresse, wobei das Verfahren ferner umfasst:
Zuweisen, durch den Speicherknoten Nⱼ, eines Zeitstempels TP_{Kj} zu den Daten des "Strip" SU_{Kj};
wobei, nachdem der Speicherknoten Nⱼ fehlerhaft ist, ein neuer Speicherknoten die Daten des "Strip" SU_{Nj} basierend auf dem "Stripe" S_{N} wiederherstellt und die Daten von SU_{Kj} basierend auf dem "Stripe" S_{K} wiederherstellt; der neue Speicherknoten einen Zeitstempel TP_{NX} von Daten eines "Strip" SU_{NX} in einem Speicherknoten N_{X} als einen Referenzzeitstempel der Daten des "Strip" SU_{Nj} erhält und einen Zeitstempel TP_{KX} von Daten eines "Strip" SU_{KX} in dem Speicherknoten N_{X} als einen Referenzzeitstempel der Daten des "Strip" SU_{Kj} erhält und der neue Speicherknoten, aus einem Puffer basierend auf dem Zeitstempel TP_{NX} und dem Zeitstempel TP_{KX}, "Strip"-Daten, die einem früheren Zeitpunkt entsprechen, in den Daten des "Strip" SU_{Nj} und den Daten von SU_{Kj} entfernt, wobei X eine beliebige Ganzzahl von 1 bis M außer j ist.

2. Verfahren nach Anspruch 1, wobei die Daten von SU_{Nj} zumindest eines von einem Identifikator des ersten Client und einem Zeitstempel TP_{N}, an dem der erste Client den "Stripe" S_{N} erhält, umfassen.

3. Verfahren nach einem der Ansprüche 1 bis 2, wobei das Verfahren ferner umfasst:
Empfangen, durch den Speicherknoten Nⱼ, von Daten eines "Strip" SU_{Yj} in einem "Stripe" S_{Y}, der durch den ersten Client gesendet wird, wobei die Daten des "Strip" SU_{Yj} durch Teilen von zweiten Daten durch den ersten Client erhalten werden; die zweiten Daten durch Empfangen einer zweiten Schreibanforderung durch den ersten Client erhalten werden; die zweite Schreibanforderung die zweiten Daten und die logische Adresse umfasst und die logische Adresse zum Bestimmen, dass sich die zweiten Daten in der Partition P befinden, verwendet wird; und
Speichern, durch den Speicherknoten Nj, basierend auf einer Abbildung zwischen einem Identifikator eines "Strip" SU_{Yj} und einer zweiten physischen Adresse des Speicherknotens Nⱼ, der Daten von SU_{Yj} an der zweiten physischen Adresse.

4. Verfahren nach Anspruch 3, wobei das Verfahren ferner umfasst:
Zuweisen, durch den Speicherknoten Nj, eines Zeitstempels TP_{Yj} zu den Daten des "Strip" SU_{Yj}.

5. Verfahren nach Anspruch 3 oder 4, wobei das Verfahren ferner umfasst:
Herstellen, durch den Speicherknoten Nⱼ, einer Übereinstimmung zwischen einer logischen Adresse der Daten des "Strip" SU_{Yj} und einem Identifikator des "Strip" SU_{Yj}.

6. Verfahren nach einem der Ansprüche 3 bis 5, wobei die Daten von SU_{Yj} zumindest eines von dem Identifikator des ersten Client und einem Zeitstempel TP_{Y}, an dem der erste Client den "Stripe" S_{Y} erhält, umfassen.

7. Verfahren nach Anspruch 1, wobei das Verfahren ferner umfasst:
Herstellen, durch den Speicherknoten Nⱼ, einer Übereinstimmung zwischen einer logischen Adresse der Daten des "Strip" SU_{Kj} und dem Identifikator des "Strip" SU_{Kj}.

8. Verfahren nach Anspruch 1, wobei die Daten von SU_{Kj} zumindest eines von einem Identifikator des zweiten Client und einem Zeitstempel TP_{K}, an dem der zweite Client den "Stripe" S_{K} erhält, umfassen.

9. Verfahren nach Anspruch 1, wobei jedes Datenelement des einen oder der mehreren "Strips" SU_{Nj} ferner Daten-"Strip"-Statusinformationen umfasst und die Daten-"Strip"-Statusinformationen zum Identifizieren, ob jeder Daten-"Strip" des "Stripe" S_{N} leer ist, verwendet werden.

10. Einrichtung (11, 12) zum Speichern von Daten in einem verteilten Blockspeichersystem, wobei das verteilte Blockspeichersystem eine Partition P umfasst, die Partition P M Speicherknoten Nⱼ und R "Stripes" Si umfasst und jeder "Stripe" "Strips" SUᵢⱼ umfasst, wobei j jede Ganzzahl von 1 bis M ist und i jede Ganzzahl von 1 bis R ist und die Einrichtung zum Speichern von Daten umfasst:
eine Empfangseinheit (111, 121), die dazu ausgelegt ist, Daten eines "Strip" SU_{Nj} in einem "Stripe" S_{N}, der durch einen ersten Client gesendet wird, zu empfangen, wobei die Daten des "Strip" SU_{Nj} durch Teilen von ersten Daten durch den ersten Client erhalten werden;
die ersten Daten durch Empfangen einer ersten Schreibanforderung durch den ersten Client erhalten werden; die erste Schreibanforderung die ersten Daten und eine logische Adresse umfasst und die logische Adresse zum Bestimmen, dass sich die ersten Daten in der Partition P befinden, verwendet wird; und
eine Speichereinheit (122), die dazu ausgelegt ist, basierend auf einer Abbildung zwischen einem Identifikator des "Strip" SU_{Nj} und einer ersten physischen Adresse des Speicherknotens Nⱼ, die Daten von SU_{Nj} an der ersten physischen Adresse zu speichern;
eine Zuweisungseinheit, die dazu ausgelegt ist, einen Zeitstempel TP_{NJ} zu den Daten des "Strip" SU_{Nj} zuzuweisen, wobei die Einrichtung zum Speichern von Daten ferner umfasst:
eine Herstellungseinheit, die dazu ausgelegt ist, eine Übereinstimmung zwischen einer logischen Adresse der Daten des "Strip" SU_{Nj} und dem Identifikator des "Strip" SU_{Nj} herzustellen, wobei die Empfangseinheit ferner dazu ausgelegt ist, Daten eines "Strip" SU_{Kj} in einem "Stripe" S_{K}, der durch einen zweiten Client gesendet wird, zu empfangen, wobei die Daten des "Strip" SU_{Kj} durch Teilen von dritten Daten durch den zweiten Client erhalten werden; die dritten Daten durch Empfangen einer dritten Schreibanforderung durch den zweiten Client erhalten werden; die dritte Schreibanforderung die dritten Daten und die logische Adresse umfasst und die logische Adresse zum Bestimmen, dass sich die dritten Daten in der Partition P befinden, verwendet wird; und
die Speichereinheit ferner dazu ausgelegt ist, basierend auf einer Abbildung zwischen einem Identifikator eines "Strip" SU_{K} und einer dritten physischen Adresse des Speicherknotens Nⱼ, die Daten von SU_{Kj} an der dritten physischen Adresse zu speichern, wobei die Zuweisungseinheit ferner dazu ausgelegt ist, einen Zeitstempel TP_{Kj} zu den Daten des "Strip" SU_{Kj} zuzuweisen;
wobei die Einrichtung zum Speichern von Daten ferner eine Wiederherstellungseinheit umfasst, die ausgelegt ist zum: nachdem der Speicherknoten Nⱼ fehlerhaft ist, Wiederherstellen der Daten des "Strip" SU_{Nj} an einem neuen Speicherknoten basierend auf dem "Stripe" S_{N} und Wiederherstellen der Daten von SU_{Kj} an dem neuen Speicherknoten basierend auf dem "Stripe" S_{K}; die Einrichtung zum Speichern von Daten ferner eine Erhaltungseinheit (113) umfasst, die ausgelegt ist zum: Erhalten eines Zeitstempels TP_{NX} von Daten eines "Strip" SU_{NX} in einem Speicherknoten N_{X} als einen Referenzzeitstempel der Daten des "Strip" SU_{Nj} und Erhalten eines Zeitstempels TP_{KX} von Daten eines "Strip" SU_{KX} in dem Speicherknoten N_{X} als einen Referenzzeitstempel der Daten des "Strip" SU_{Kj}, und die Einrichtung zum Speichern von Daten ferner eine Entfernungseinheit umfasst, die ausgelegt ist zum: Entfernen, aus einem Puffer des neuen Speicherknotens basierend auf dem Zeitstempel TP_{NX} und dem Zeitstempel TP_{KX}, von "Strip"-Daten, die einem früheren Zeitpunkt entsprechen, in den Daten des "Strip" SU_{Nj} und den Daten von SU_{Kj}, wobei X eine beliebige Ganzzahl von 1 bis M außer j ist.

11. Einrichtung zum Speichern von Daten nach Anspruch 10, wobei die Daten von SU_{Nj} zumindest eines von einem Identifikator des ersten Client und einem Zeitstempel TP_{N}, an dem der erste Client den "Stripe" S_{N} erhält, umfassen.

12. Einrichtung zum Speichern von Daten nach einem der Ansprüche 10 bis 11, wobei die Empfangseinheit ferner dazu ausgelegt ist, Daten eines "Strip" SU_{Yj} in einem "Stripe" S_{Y}, der durch den ersten Client gesendet wird, zu empfangen, wobei die Daten des "Strip" SU_{Yj} durch Teilen von zweiten Daten durch den ersten Client erhalten werden; die zweiten Daten durch Empfangen einer zweiten Schreibanforderung durch den ersten Client erhalten werden; die zweite Schreibanforderung die zweiten Daten und die logische Adresse umfasst und die logische Adresse zum Bestimmen, dass sich die zweiten Daten in der Partition P befinden, verwendet wird; und
die Speichereinheit ferner dazu ausgelegt ist, basierend auf einer Abbildung zwischen einem Identifikator eines "Strip" SU_{Yj} und einer zweiten physischen Adresse des Speicherknotens Nⱼ, die Daten von SU_{Yj} an der zweiten physischen Adresse zu speichern.

13. Einrichtung zum Speichern von Daten nach Anspruch 10, wobei die Zuweisungseinheit ferner dazu ausgelegt ist, einen Zeitstempel TP_{Yj} zu den Daten des "Strip" SU_{Yj} zuzuweisen.

14. Einrichtung zum Speichern von Daten nach Anspruch 12 oder 13, wobei die Herstellungseinheit ferner dazu ausgelegt ist, eine Übereinstimmung zwischen einer logischen Adresse der Daten des "Strip" SU_{Yj} und einem Identifikator des "Strip" SU_{Yj} herzustellen.

15. Einrichtung zum Speichern von Daten nach einem der Ansprüche 12 bis 14, wobei die Daten von SU_{Yj} zumindest eines von dem Identifikator des ersten Client und einem Zeitstempel TP_{Y}, an dem der erste Client den "Stripe" Sy erhält, umfassen.

16. Einrichtung zum Speichern von Daten nach Anspruch 10, wobei die Herstellungseinheit ferner dazu ausgelegt ist, eine Übereinstimmung zwischen einer logischen Adresse der Daten des "Strip" SU_{Kj} und einem Identifikator des "Strip" SU_{Kj} herzustellen.

17. Einrichtung zum Speichern von Daten nach einem der Ansprüche 10 bis 16, wobei die Daten von SU_{Kj} zumindest eines von einem Identifikator des zweiten Client und einem Zeitstempel TP_{K}, an dem der zweite Client den "Stripe" S_{K} erhält, umfassen.

18. Einrichtung zum Speichern von Daten nach einem der Ansprüche 10 bis 17, wobei jedes Datenelement des einen oder der mehreren "Strips" SU_{Nj} ferner Daten-"Strip"-Statusinformationen umfasst und die Daten-"Strip"-Statusinformationen zum Identifizieren, ob jeder Daten-"Strip" des "Stripe" S_{N} leer ist, verwendet werden.

## Revendications

1. Procédé de stockage de données dans un système de stockage de blocs distribué, dans lequel le système de stockage de blocs distribué comprend une partition P, la partition P comprend M nœuds de stockage Nⱼ et R bandes Si, et chaque bande comprend des bandes SUᵢⱼ, où j est chaque entier de 1 à M, et i est tout entier de 1 à R ; et le procédé comprend de :
recevoir (801), par un nœud de stockage Nⱼ, des données d'une bande SU_{Nj} dans une bande S_{N} envoyées par un premier client, dans lequel les données de la bande SU_{Nj} sont obtenues en divisant de premières données par le premier client; les premières données sont obtenues en recevant une première demande d'écriture par le premier client ; la première demande d'écriture comprend les premières données et une adresse logique ; et l'adresse logique est utilisée pour déterminer que les premières données sont situées dans la partition P ; et
stocker (802), par le nœud de stockage Nⱼ sur la base d'un mappage entre un identifiant de la bande SU_{Nj} et une première adresse physique du nœud de stockage Nⱼ, les données de SU_{Nj} à la première adresse physique ; et
attribuer, par le nœud de stockage Nⱼ, un horodatage TP_{Nj} aux données de la bande SU_{Nj} dans lequel le procédé comprend en outre de :
établir, par le nœud de stockage Nⱼ, une correspondance entre une adresse logique des données de la bande SU_{Nj} et l'identifiant de la bande SU_{Nj}, le procédé comprenant en outre de :
recevoir, par le nœud de stockage Nⱼ, des données d'une bande SU_{Kj} dans une bande S_{K} envoyées par un deuxième client, dans lequel les données de la bande SU_{Kj} sont obtenues en divisant de troisièmes données par le deuxième client ; les troisièmes données sont obtenues en recevant une troisième demande d'écriture par le deuxième client ; la troisième demande d'écriture comprend les troisièmes données et l'adresse logique ; et l'adresse logique est utilisée pour déterminer que les troisièmes données sont situées dans la partition P ; et
stocker, par le nœud de stockage Nⱼ sur la base d'un mappage entre un identifiant d'une bande SU_{K} et une troisième adresse physique du nœud de stockage Nⱼ, les données de SU_{Kj} à la troisième adresse physique, le procédé comprenant en outre de :
attribuer, par le nœud de stockage Nⱼ, un horodatage TP_{Kj} aux données de la bande SU_{Kj}, dans lequel lorsque le nœud de stockage Nⱼ est défectueux, un nouveau nœud de stockage récupère les données de la bande SU_{Nj} sur la base de la bande S_{N} et récupère les données de SU_{Kj} sur la base de la bande S_{K}; le nouveau nœud de stockage obtient un horodatage TP_{NX} de données d'une bande SU_{NX} dans un nœud de stockage N_{X} comme horodatage de référence des données de la bande SU_{Nj}, et obtient un horodatage TP_{KX} de données d'une bande SU_{KX} dans le nœud de stockage N_{X} comme horodatage de référence des données de la bande SU_{Kj} ; et le nouveau nœud de stockage élimine, à partir d'un tampon sur la base de l'horodatage TP_{NX} et de l'horodatage TP_{KX}, des données de bande, correspondant à un temps antérieur, dans les données de la bande SU_{Nj} et les données de SU_{Kj}, où X est tout entier de 1 à M autre que j.

2. Procédé selon la revendication 1, dans lequel les données de SU_{Nj} comprennent au moins l'un d'un identifiant du premier client et d'un horodatage TP_{N} auquel le premier client obtient la bande S_{N}.

3. Procédé selon l'une quelconque des revendications 1 à 2, dans lequel le procédé comprend en outre de :
recevoir, par le nœud de stockage Nⱼ, des données d'une bande SUyj dans une bande S_{Y} envoyées par le premier client, dans lequel les données de la bande SU_{Yj} sont obtenues en divisant de deuxièmes données par le premier client ; les deuxièmes données sont obtenues en recevant une deuxième demande d'écriture par le premier client ; la deuxième demande d'écriture comprend les deuxièmes données et l'adresse logique ; et l'adresse logique est utilisée pour déterminer que les deuxièmes données sont situées dans la partition P ; et
stocker, par le nœud de stockage Nⱼ sur la base d'un mappage entre un identifiant d'une bande SU_{Yj} et une deuxième adresse physique du nœud de stockage Nⱼ, les données de SU_{Yj} à la deuxième adresse physique.

4. Procédé selon la revendication 3, dans lequel le procédé comprend en outre de :
attribuer, par le nœud de stockage Nⱼ, un horodatage TP_{Yj} aux données de la bande SU_{Yj}.

5. Procédé selon la revendication 3 ou 4, dans lequel le procédé comprend en outre de :
établir, par le nœud de stockage Nⱼ, une correspondance entre une adresse logique des données de la bande SU_{Yj} et un identifiant de la bande SU_{Yj}.

6. Procédé selon l'une quelconque des revendications 3 à 5, dans lequel les données de SU_{Yj} comprennent au moins l'un de l'identifiant du premier client et d'un horodatage TP_{Y} auquel le premier client obtient la bande S_{Y}.

7. Procédé selon la revendication 1, dans lequel le procédé comprend en outre de :
établir, par le nœud de stockage Nⱼ, une correspondance entre une adresse logique des données de la bande SU_{Kj} et un identifiant de la bande SU_{Kj}.

8. Procédé selon la revendication 1, dans lequel les données de SU_{Kj} comprennent au moins l'un d'un identifiant du deuxième client et d'un horodatage TP_{K} auquel le deuxième client obtient la bande S_{K}.

9. Procédé selon la revendication 1, dans lequel chaque élément de données des une ou plusieurs bandes SU_{Nj} comprend en outre des informations d'état de bande de données, et les informations d'état de bande de données sont utilisées pour identifier si chaque bande de données de la bande S_{N} est vide.

10. Appareil (11, 12) pour stocker des données dans un système de stockage de blocs distribué, dans lequel le système de stockage de blocs distribué comprend une partition P, la partition P comprend M nœuds de stockage Nⱼ et R bandes Sᵢ, et chaque bande comprend des bandes SUᵢⱼ, où j est chaque entier de 1 à M, et i est chaque entier de 1 à R; et l'appareil pour stocker des données comprend :
une unité de réception (111, 121), configurée pour recevoir des données d'une bande SU_{Nj} dans une bande S_{N} envoyées par un premier client, dans lequel les données de la bande SU_{Nj} sont obtenues en divisant de premières données par le premier client ; les premières données sont obtenues en recevant une première demande d'écriture par le premier client ; la première demande d'écriture comprend les premières données et une adresse logique ; et l'adresse logique est utilisée pour déterminer que les premières données sont situées dans la partition P ; et
une unité de stockage (122), configurée pour stocker, sur la base d'un mappage entre un identifiant de la bande SU_{Nj} et une première adresse physique du nœud de stockage Nⱼ, les données de SU_{Nj} à la première adresse physique ;
une unité d'attribution, configurée pour attribuer un horodatage TP_{Nj} aux données de la bande SU_{Nj}, dans lequel l'appareil pour stocker des données comprend en outre :
une unité d'établissement, configurée pour établir une correspondance entre une adresse logique des données de la bande SU_{Nj} et l'identifiant de la bande SU_{Nj}, dans lequel l'unité de réception est en outre configurée pour recevoir des données d'une bande SU_{Kj} dans une bande S_{K} envoyées par un deuxième client, dans lequel les données de la bande SU_{Kj} sont obtenues en divisant de troisièmes données par le deuxième client ; les troisièmes données sont obtenues en recevant une troisième demande d'écriture par le deuxième client ; la troisième demande d'écriture comprend les troisièmes données et l'adresse logique ; et l'adresse logique est utilisée pour déterminer que les troisièmes données sont situées dans la partition P ; et
l'unité de stockage est en outre configurée pour stocker, sur la base d'un mappage entre un identifiant d'une bande SU_{K} et une troisième adresse physique du nœud de stockage Nⱼ, les données de SU_{Kj} à la troisième adresse physique, dans lequel l'unité d'attribution est en outre configurée pour attribuer un horodatage TP_{Kj} aux données de la bande SU_{Kj},
dans lequel l'appareil pour stocker des données comprend en outre une unité de récupération, configurée pour : lorsque le nœud de stockage Nⱼ est défectueux, récupérer les données de la bande SU_{Nj} au niveau d'un nouveau nœud de stockage sur la base de la bande S_{N} et récupérer les données de SU_{Kj} au niveau du nouveau nœud stockage sur la base de la bande S_{K}; l'appareil pour stocker des données comprend en outre une unité d'obtention (113), configurée pour : obtenir un horodatage TP_{NX} de données d'une bande SU_{NX} dans un nœud de stockage Nx en tant qu'horodatage de référence des données de la bande SU_{Nj}, et obtenir un horodatage TP_{KX} de données d'une bande SU_{KX} dans le nœud de stockage Nx en tant qu'horodatage de référence des données de la bande SU_{Kj} ; et l'appareil pour stocker des données comprend en outre une unité d'élimination, configurée pour : éliminer, à partir d'un tampon du nouveau nœud de stockage sur la base de l'horodatage TP_{NX} et de l'horodatage TP_{KX}, des données de bande, correspondant à un temps antérieur, dans les données de la bande SU_{Nj} et les données de SU_{Kj}, où X est tout entier de 1 à M autre que j.

11. Appareil pour stocker des données selon la revendication 10, dans lequel les données de SU_{Nj} comprennent au moins l'un d'un identifiant du premier client et d'un horodatage TP_{N} auquel le premier client obtient la bande SN.

12. Appareil pour stocker des données selon l'une quelconque des revendications 10 à 11, dans lequel l'unité de réception est en outre configurée pour recevoir des données d'une bande SU_{Yj} dans une bande S_{Y} envoyées par le premier client, dans lequel les données de la bande SU_{Yj} sont obtenues en divisant de deuxièmes données par le premier client ; les deuxièmes données sont obtenues en recevant une deuxième demande d'écriture par le premier client ; la deuxième demande d'écriture comprend les deuxièmes données et l'adresse logique ; et l'adresse logique est utilisée pour déterminer que les deuxièmes données sont situées dans la partition P ; et
l'unité de stockage est en outre configurée pour stocker, sur la base d'un mappage entre un identifiant d'une bande SU_{Yj} et une deuxième adresse physique du nœud de stockage Nⱼ, les données de SU_{Yj} à la deuxième adresse physique.

13. Appareil pour stocker des données selon la revendication 10, dans lequel l'unité d'attribution est en outre configurée pour attribuer un horodatage TP_{Yj} aux données de la bande SU_{Yj}.

14. Appareil pour stocker des données selon la revendication 12 ou 13, dans lequel l'unité d'établissement est en outre configurée pour établir une correspondance entre une adresse logique des données de la bande SU_{Yj} et un identifiant de la bande SU_{Yj}.

15. Appareil pour stocker des données selon l'une quelconque des revendications 12 à 14, dans lequel les données de SU_{Yj} comprennent au moins l'un de l'identifiant du premier client et d'un horodatage TP_{Y} auquel le premier client obtient la bande S_{Y}.

16. Appareil pour stocker des données selon la revendication 10, dans lequel l'unité d'établissement est en outre configurée pour établir une correspondance entre une adresse logique des données de la bande SU_{Kj} et un identifiant de la bande SU_{Kj}.

17. Appareil pour stocker des données selon l'une quelconque des revendications 10 à 16, dans lequel les données de SU_{Kj} comprennent au moins l'un d'un identifiant du deuxième client et d'un horodatage TP_{K} auquel le deuxième client obtient la bande S_{K}.

18. Appareil pour stocker des données selon l'une quelconque des revendications 10 à 17, dans lequel chaque élément de données des une ou plusieurs bandes SU_{Nj} comprend en outre des informations d'état de bande de données, et les informations d'état de bande de données sont utilisées pour identifier si chaque bande de données de la bande S_{N} est vide.
